(19)

Europäisches
Patentamt
European
Patent Office
Office européen
des brevets

(11)　**EP 2 677 330 A1**

(12)　**EUROPEAN PATENT APPLICATION**

(43) Date of publication:
　　25.12.2013　Bulletin 2013/52

(51) Int Cl.:
　　*G01R 31/40* (2006.01)

(21) Application number: **12173157.4**

(22) Date of filing: **22.06.2012**

(84) Designated Contracting States:
　　**AL AT BE BG CH CY CZ DE DK EE ES FI FR GB
　　GR HR HU IE IS IT LI LT LU LV MC MK MT NL NO
　　PL PT RO RS SE SI SK SM TR**
　　Designated Extension States:
　　**BA ME**

(71) Applicant: **Danfoss Drives A/S
　　6300 Graasten (DK)**

(72) Inventor: **Ljusev, Petar
　　6400 Sønderborg (DK)**

(74) Representative: **Inspicos A/S
　　Kogle Allé 2
　　P.O. Box 45
　　2970 Hørsholm (DK)**

(54)　**Method for determining isolation faults in photovoltaic installations**

(57)　The present invention relates to a method and an arrangement for determining a position of an isolation fault in a PV installation, the method comprising the steps of
- determining a total equivalent voltage source value of a Thevenin equivalent circuit of the PV installation,
- locating the isolation fault within the PV string by comparing a measured voltage value of the PV string and the total equivalent voltage source value.

　Isolation faults may involve faults in PV modules, PV cable etc. of the PV installation.

Fig. 2

EP 2 677 330 A1

**Description**

FIELD OF THE INVENTION

The present invention relates to a method and an arrangement for determining isolation faults in photovoltaic (PV) installations. In particular, the present invention relates to a method and an arrangement for determining a position of one or more isolation faults in PV installations. Isolation faults may relate to defective PV modules, PV cables etc.

BACKGROUND OF THE INVENTION

According to the standard IEC 62109-2 a PV installation that is connected to a power distribution grid is required to exhibit a minimum isolation resistance to ground. The standard defines the highest allowed leakage current in a PV installation, which together with a PV system voltage sets the minimum PV isolation resistance that the inverter is allowed to operate with. If a measured isolation resistance is lower than the minimum required value, it is not allowed to connect the PV installation to a power distribution grid. For example, the lowest allowable isolation resistance for a 1000 V PV installation is 33 kΩ.

There can be multiple reasons for a low isolation resistance. Some of them are temporary, such as broken PV glass where the intrusion of moisture creates low resistance to the grounded metal frame. This kind of failure is likely to improve in dry weather and strong solar irradiation. The isolation failure can be also permanent in case of a defect of PV module. In both of these cases a change of the defective PV module will improve the situation by allowing the inverter to connect to the grid and maximize the daily energy production. Additionally or alternatively, the low PV resistance can also be a result of wear-out (degradation) of the PV module insulation system after many years of use out in the field in harsh climatic conditions. In this case it is likely that refurbishment of a single or few PV modules is not a reliable solution in a longer run.

Prior art methods and arrangements are only capable for determining the isolation resistance of a PV installation. In the case that a measured isolation resistance is lower than the value specified in the selected country settings, an error will be reported without any further fault description. No list of possible causes or ways to eliminate the fault is provided. Typically, the PV installation will try to reconnect after, for example, 10 minutes, hoping that the isolation fault is temporary and thus disappears due to stronger solar irradiation later during the day.

It may be seen as an object of embodiments of the present invention to provide a method and an arrangement that is capable of locating an isolation fault in a PV installation.

It may be seen as a further object of embodiments of the present invention to provide a method and an arrangement that is capable of disabling by disconnecting a faulty PV string so that a PV installation comprising a plurality of PV strings can be connected to an associated power distribution grid.

DESCRIPTION OF THE INVENTION

The above-mentioned objects are complied with by providing, in a first aspect, a method for determining a position of an isolation fault in a PV installation comprising a plurality of PV modules arranged in a PV string being operatively connected to a common DC-link, the method comprising the steps of

- determining a total equivalent voltage source value of a Thevenin equivalent circuit of the PV installation,

- locating the isolation fault within the PV string by comparing a measured voltage value of the PV string and the total equivalent voltage source value.

An isolation fault may involve a faulty PV module or several faulty PV modules where the isolation resistance to ground is for some reason either temporary or permanently lowered yielding an isolation resistance being lower than a certain value. Such value may be around 33 kΩ in case of a 1000 V PV installation. An isolation fault may also involve a faulty cable.

The determined isolation resistance and the various voltage values are all determined relative to ground or earth. In practice this is often accomplished by measuring the voltage relative to the chassis of the inverter or frame of the housing, which is in turn solidly connected to the local terrain or the Protective Earth (PE) conductor coming from the distribution transformer.

A ratio between the measured voltage value of the PV string and the total equivalent voltage source value may be determined, said ratio being a measure for the location of the isolation fault.

In a second aspect the present invention relates to an arrangement for determining a position of an isolation fault in a PV installation comprising a plurality of PV modules arranged in a PV string being operatively connected to a common DC-link, the arrangement comprising

- means for determining a total equivalent voltage source value of a Thevenin equivalent circuit of the PV installation,
- means for comparing an open circuit voltage value of the PV string and the total equivalent voltage source value in order to locate the isolation fault within the PV string.

Thus, the second aspect relates to an arrangement for carrying out the method of the first aspect.

Again, the determined isolation resistance and the various voltage values are all determined relative to ground as described above.

The comparing means may be adapted to determine a ratio between the measured voltage value of the PV string and the total equivalent voltage source value, said ratio being a measure for the location of the isolation fault.

An intermediate circuit may be arranged between the PV string and the common DC-link. This intermediate circuit may comprise a booster circuit, a buck-boost converter or the like.

In a third aspect, the present invention relates to a renewable energy installation comprising a PV installation comprising an arrangement according to the second aspect. The renewable energy installation may further comprise an inverter, such as a DC/AC inverter, for converting DC power on the common DC-link to AC power suitable for being fed into an associated AC power distribution grid. Moreover, the renewable energy installation may further comprise controllable switching means for connecting and disconnecting the renewable energy installation to and from the associated AC power distribution grid.

The first, second and third aspects of the present invention all relate PV installations having a number of PV modules arranged in a single PV string. Contrary to this, the following aspects all relates to PV installations comprising PV modules being arranged in a plurality of PV strings.

In a fourth aspect the present invention relates to a method for determining a position of an isolation fault in a PV installation comprising a plurality of PV modules being arranged in a first and a second PV string, the first and second PV strings being connected to respective first and a second short-circuiting means, the method comprising the steps of

- determining a total equivalent voltage source value of a Thevenin equivalent circuit of the PV installation,

- short-circuiting the first PV string and determining a first equivalent voltage source value,

- short-circuiting the second PV string and determining a second equivalent voltage source value, and

- locating a faulty PV string by comparing the first and second equivalent voltage source values with the total equivalent voltage source value.

Again, an isolation fault may involve a faulty PV module or several faulty PV modules where the isolation resistance to ground is for some reason either temporary or permanently lowered yielding an isolation resistance being lower than a certain value. As previously mentioned this value may be around 33 kΩ in case of a 1000 V PV installation. An isolation fault may also involve a faulty cable. The determined isolation resistance and the various voltage values are all determined relative to ground.

The faulty PV string may be located as the PV string having an equivalent voltage source value that deviates from the total equivalent voltage source value by more than a predetermined amount. This predetermined amount may be, for example, 30V.

The method may further comprise the step of comparing a measured voltage value of the faulty PV string and the total equivalent voltage source value. Specifically, a ratio between the measured voltage value of the faulty PV string and the total equivalent voltage source value may be determined. This ratio may be a measure for the location of the isolation fault within the faulty PV string. The isolation fault itself may involve a faulty PV module/modules and/or faulty PV cables etc..

It is an advantage of the present invention that the method may allow that the faulty PV string is disabled, for example by disconnecting the faulty PV string from the PV installation. The remaining and correctly functioning part of the PV installation may be connected to an associated power distribution grid in order to ensure maximum production time.

The method may further comprise the step of connecting the PV installation to a power distribution grid via a DC/AC power inverter in order to feed power into said power distribution grid.

In a fifth aspect the present invention relates to an arrangement for determining a position of an isolation fault in a PV installation comprising a plurality of PV modules being arranged in a first and a second PV string, the arrangement comprising

- means for determining a total equivalent voltage source value of a Thevenin equivalent circuit of the PV installation,

- means for short-circuiting the first PV string and determining a first equivalent voltage source value,

- means for short-circuiting the second PV string and determining a second equivalent voltage source value, and

- means for locating a faulty PV string by comparing the first and second equivalent voltage source values with the total equivalent voltage source value.

The above-mentioned arrangement is adapted to perform the method of the fourth aspect.

The short-circuiting means may form part of respective first and second intermediate circuits, said first and second intermediate circuits being connected to a common DC-link. Alternatively, the short-circuiting means may form part of boost, buck-boost or similar circuits.

The arrangement may comprise additional PV strings, each of said additional PV strings being connected to a booster, buck-boost circuits (or the like) being connected to the common DC-link.

In a sixth aspect the present invention relates to a renewable energy installation comprising a PV installation comprising an arrangement according to the fifth aspect. The renewable energy installation may further comprise an inverter, such as a DC/AC inverter, for converting DC power on a common DC-link to AC power suitable for being fed into an associated AC power distribution grid.

BRIEF DESCRIPTION OF THE DRAWINGS

The present invention will now be described in further details with reference to the accompanying figures where

Fig. 1 shows a generic drawing of a PV installation connected to a power distribution grid, and

Fig. 2 shows a PV installation comprising a single PV string.

While the invention is susceptible to various modifications and alternative forms, specific embodiments have been disclosed by way of examples. It should be understood, however, that the invention is not intended to be limited to the particular forms disclosed. Rather, the invention is to cover all modifications, equivalents, and alternatives falling within the spirit and scope of the invention as defined by the appended claims.

DETAILED DESCRIPTION OF THE INVENTION

In its most general aspect the present invention aims at providing a method and an arrangement for locating isolation faults in a PV installation. For PV installations comprising a plurality of PV strings the method and arrangement facilitate disabling by disconnection of faulty PV strings in order to ensure maximum energy production time, i.e. maintain connection between the PV installation and an associated power distribution grid as long as possible.

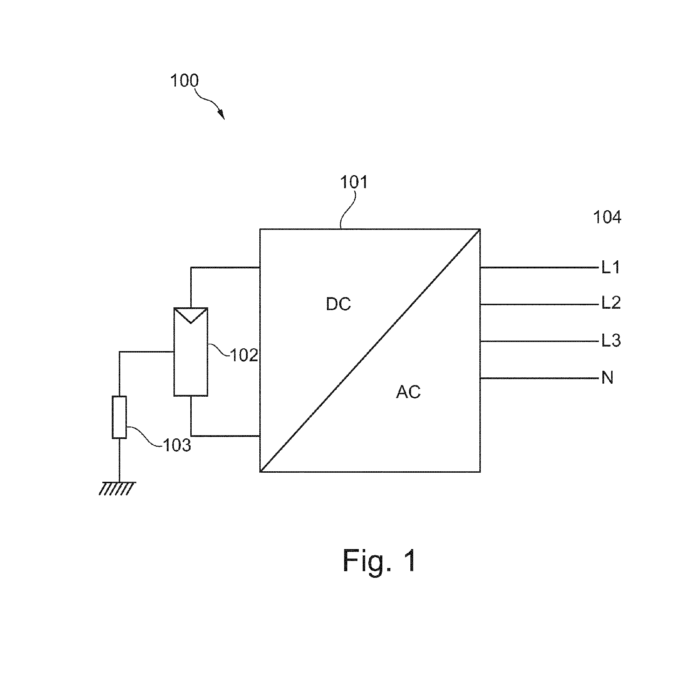

Referring now to Fig. 1, a PV installation 100 is depicted. The PV installation 100 comprises an inverter 101 operationally connected to a number of PV modules arranged in a PV string 102 via a booster circuit (not shown). The PV string may comprise a plurality of series connected PV modules. The inverter 101 is depicted as a three-phase inverter being arranged to provide power to a three-phase AC power grid 104. Additional PV strings coupled to additional booster circuits may provide power to a common DC-link serving as input to the inverter 101.

Before connecting a PV installation to an associated power distribution grid the value of the isolation resistance 103 must be detected. The value of the isolation resistance 103 has to be determined and validated against the specified limits. If the isolation resistance is determined and its value is found to be lower than, for example, 33 k$\Omega$ (for a 1000 V PV installation), the PV installation is not allowed to be connected to the associated power distribution grid. This is the case no matter where in a PV string the low isolation resistance occurs.

As explained below, the present invention is capable of locating faults within the PV installation that cause the low isolation resistance. As mentioned above, such faults may involve defective PV modules and/or defective cables. If demands so require, the faulty PV strings may be disabled by disconnection so that the remaining PV modules, and thereby the PV installation as a whole, can be connected to the associated power distribution grid.

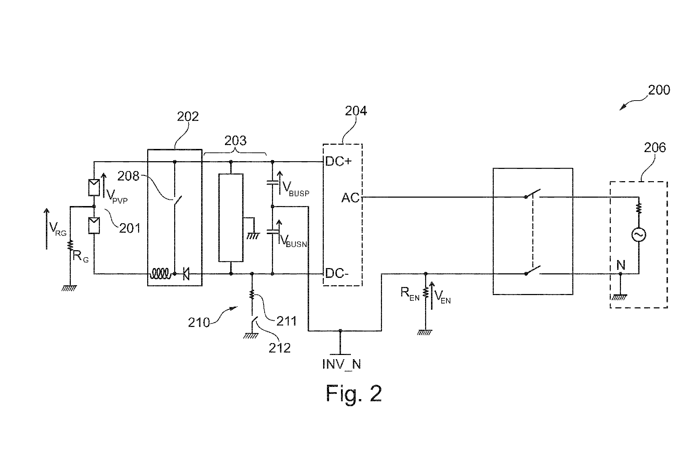

A more detailed diagram of a one-phase PV installation 200 is shown in Fig. 2. The installation comprises a PV string 201 connected to a booster circuit 202 comprising inner relays/switches 208.

A circuit 203 for determining the isolation resistance, $R_G$, is inserted between the booster circuit 202 and the DC/AC inverter 204. If additional PV strings and booster circuits were present these boosters circuits would be connected to the same DC-link as booster circuit 202.

The equivalent voltage source, $V_{PVP}$, is calculated on the basis of measured voltages, measured or calculated currents and known inverter resistances:

$$V_{PVP} = V_{BUSP1} - V_{EN1} - I_{G1} \cdot R_G = V_{BUSP1} - V_{EN1} - I_{G1} \cdot \frac{V_{BUSP2} - V_{BUSP1} + V_{EN1} - V_{EN2}}{I_{G2} - I_{G1}}$$

where indices 1 and 2 refers to two different working points, and $I_{Gn}$ is the current through $R_G$. The various voltages of the above equation are all indicated in Fig. 2.

The two different working points can be obtained in a number of ways including the introduction of different impedances originating from different rails of the inverter with their associated voltages and down to the chassis / Earth connection. In one embodiment, an additional circuit 210 comprising a resistance 211 and a series switch 212 to ground may be employed. In other embodiments, the circuit 203, normally used to determine the isolation resistance, may be used to change the working point of the circuit. The working points should be chosen in order to enable sufficient accuracy to the measurement of $V_{PVP}$.

I would say that providing two operating points for the PV isolation test is done by introducing different impedances originating from different rails of the inverter with their associated voltages and down to the chassis / Earth connection.

When the equivalent voltage source, $V_{PVP}$, has been determined, then the position L of the isolation failure expressed as a percentage of the PV string length (where 0% is at the negative end of the string) is:

$$L = \frac{V_{PV} - V_{PVP}}{V_{PV} \times 100}$$

where $V_{PV}$ is the measured voltage value of the PV string.

The location of an isolation fault within a PV installation having a plurality of PV strings is determined in the following manner:

1. Each of the strings 201 (only one is shown in Fig. 2) are short-circuited one at a time. In the embodiment shown in Fig. 2, this is done by using the parallel coupled boosters 202 (only one shown in Fig. 2) which are short-circuited one at a time by closing the switch 208 of the booster. For each short-circuited booster an equivalent voltage source value, $V_{PVP}$, of an isolation fault is determined.

2. The determined equivalent voltage source value for each short-circuited booster is compared with the equivalent source voltage, $V_{PVP}$, in the normal case, i.e. without any booster being short-circuited. Since each booster is connected to a PV string this would lead to the PV string being responsible for the low isolation resistance in the case that $V_{PVP}$ with short-circuited PV strings is different from $V_{PVP}$ in the normal case.

3. In the case of a single fault in a single PV string, a measured voltage of the PV string being responsible for the low isolation resistance (cf. previous step) is compared to the equivalent source voltage, $V_{PVP}$, being determined with no short-circuited boosters. The ratio between $V_{PVP}$ and the measured voltage of the PV string provides a measure for the location of the isolation fault in the PV string being responsible for the low isolation resistance. The ratio may be expressed as a percentage of the total string length.

4. In the case that there are multiple PV strings, each having a single isolation fault, these PV strings may be identified as disclosed in step 2. Manual or automatic disconnection of all faulty PV strings except for one will help finding the location of the isolation fault in that particular string. Repeating the steps for all faulty PV inputs until all isolation failures are located will speed up the process of troubleshooting multiple isolation failures.

Thus, the present invention presents a method and an arrangement where an isolation fault (faulty PV module(s), PV cable(s) etc.) within a PV installation can be located and disabled by disconnection if demands so require. This ensures maximal energy production time and thereby maximal yield of the PV installation.

**Claims**

1.  A method for determining a position of an isolation fault in a PV installation comprising a plurality of PV modules arranged in a PV string being operatively connected to a common DC-link, the method comprising the steps of

    - determining a total equivalent voltage source value of a Thevenin equivalent circuit of the PV installation,
    - locating the isolation fault within the PV string by comparing a measured voltage value of the PV string and the total equivalent voltage source value.

2.  A method according to claim 1, wherein a ratio between the measured voltage value of the PV string and the total equivalent voltage source value is determined, said ratio being a measure for the location of the isolation fault.

3.  An arrangement for determining a position of an isolation fault in a PV installation comprising a plurality of PV modules arranged in a PV string being operatively connected to a common DC-link, the arrangement comprising

    - means for determining a total equivalent voltage source value of a Thevenin equivalent circuit of the PV installation,
    - means for comparing a measured voltage value of the PV string and the total equivalent voltage source value in order to locate the isolation fault within the PV string.

4.  An arrangement according to claim 3, wherein the comparing means is adapted to determine a ratio between the measured voltage value of the PV string and the total equivalent voltage source value, said ratio being a measure for the location of the isolation fault.

5.  An arrangement according to claim 3 or 4, further comprising an intermediate circuit between the PV string and the common DC-link.

6.  An arrangement according to claim 5, wherein the intermediate circuit comprises a booster circuit.

7.  A renewable energy installation comprising a PV installation comprising an arrangement according to any of claims 3-6.

8.  A renewable energy installation according to claim 7, further comprising an inverter, such as a DC/AC inverter, for converting DC power on the common DC-link to AC power suitable for being fed into an associated AC power distribution grid.

9.  A method for determining a position of an isolation fault in a PV installation comprising a plurality of PV modules being arranged in a first and a second PV string, the first and second PV strings being connected to respective first and a second short-circuiting means, the method comprising the steps of

    - determining a total equivalent voltage source value of a Thevenin equivalent circuit of the PV installation,
    - short-circuiting the first PV string and determining a first equivalent voltage source value,
    - short-circuiting the second PV string and determining a second equivalent voltage source value, and
    - locating a faulty PV string by comparing the first and second equivalent voltage source values with the total equivalent voltage source value.

10. A method according to claim 9, wherein the faulty PV string is located as the PV string having an equivalent voltage source value that deviates from the total equivalent voltage source value by more than a predetermined amount.

11. A method according to claim 9 or 10, further comprising the step of comparing a measured voltage value of the faulty PV string and the total equivalent voltage source value.

12. A method according to claim 9, wherein a ratio between the measured voltage value of the faulty PV string and the total equivalent voltage source value is determined, said ratio being a measure for the location of the isolation fault within the faulty PV string.

13. An arrangement for determining a position of an isolation fault in a PV installation comprising a plurality of PV modules being arranged in a first and a second PV string, the arrangement comprising

- means for determining a total equivalent voltage source value of a Thevenin equivalent circuit of the PV installation,
- means for short-circuiting the first PV string and determining a first equivalent voltage source value,
- means for short-circuiting the second PV string and determining a second equivalent voltage source value, and
- means for locating a faulty PV string by comparing the first and second equivalent voltage source values with the total equivalent voltage source value.

14. An arrangement according to claim 13, wherein the short-circuiting means form part of respective first and second intermediate circuits, said first and second intermediate circuits being connected to a common DC-link.

15. An arrangement according to claim 14, further comprising additional PV strings, each of said additional PV strings being connected to a intermediate circuit being connected to the common DC-link.

16. A renewable energy installation comprising a PV installation comprising an arrangement according to any of claims 13-15.

100

101

104

DC

102

103

AC

L1

L2

L3

N

## Fig. 1

Fig. 2

Europäisches
Patentamt

European
Patent Office

Office européen
des brevets

# EUROPEAN SEARCH REPORT

Application Number

EP 12 17 3157

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2011/048122 A1 (COMMISSARIAT ENERGIE ATOMIQUE [FR]; CHAINTREUIL NICOLAS [FR]) 28 April 2011 (2011-04-28) * abstract; figures 3,4,6,7,10 * * page 4, line 6 - page 12, line 12 * | 1-16 | INV. G01R31/40 |
| A | JP 2012 119382 A (JX NIPPON OIL & ENERGY CORP) 21 June 2012 (2012-06-21) * figures 1-3 * | 1-16 | |
| A | KR 2012 0065830 A (CHUNGPA EMT CO LTD [KR]) 21 June 2012 (2012-06-21) * figures 1,2 * | 1-16 | |
| A | EP 1 857 825 A1 (SMA TECHNOLOGIE AG [DE]) 21 November 2007 (2007-11-21) * abstract; figures 1-4 * * paragraph [0004] * | 1-16 | |
| A | HIRAK PATANGIA ET AL: "A simplified PV model for low power MPPT controller design", CIRCUITS AND SYSTEMS (APCCAS), 2010 IEEE ASIA PACIFIC CONFERENCE ON, IEEE, 6 December 2010 (2010-12-06), pages 680-683, XP031875809, DOI: 10.1109/APCCAS.2010.5774873 ISBN: 978-1-4244-7454-7 * page 680, last paragraph - page 681, last paragraph; figures 1-5 * | 1-16 | TECHNICAL FIELDS SEARCHED (IPC) G01R H01L |

-/--

The present search report has been drawn up for all claims

| Place of search | Date of completion of the search | Examiner |
|---|---|---|
| Berlin | 13 November 2012 | Ernst, Monika |

EPO FORM 1503 03.82 (P04C01)

Europäisches
Patentamt

European
Patent Office

Office européen
des brevets

# EUROPEAN SEARCH REPORT

Application Number

EP 12 17 3157

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | AUTIER V., MOLCRETTE V., ROISSE H.: "Contribution to the determination of the elements of photovoltaic panel (PV) equivalent electric model. Application in the maximal power point (MPP) available analytical expression.", INTERNATIONAL CONFERENCE ON RENEWABLE ENERGIES AND POWER QUALITY ICREPQ'03, [Online] 9 April 2003 (2003-04-09), - 12 April 2003 (2003-04-12), pages 1-8, XP002687004, vigo internet Retrieved from the Internet: URL:http://www.icrepq.com/pdfs/AUTIER359.pdf> [retrieved on 2012-11-09] * page 1, left-hand column, paragraph 1 - page 3, right-hand column, paragraph 6 * ----- | 1-16 | |
| A | BATUSHANSKY Z ET AL: "Thevenin-based approach to PV arrays maximum power prediction", ELECTRICAL AND ELECTRONICS ENGINEERS IN ISRAEL (IEEEI), 2010 IEEE 26TH CONVENTION OF, IEEE, PISCATAWAY, NJ, USA, 17 November 2010 (2010-11-17), pages 598-602, XP031830711, ISBN: 978-1-4244-8681-6 * page 598, left-hand column, paragraph 1 - page 600, left-hand column, paragraph 3 * ----- -/-- | 1-16 | TECHNICAL FIELDS SEARCHED (IPC) |

The present search report has been drawn up for all claims

| Place of search | Date of completion of the search | Examiner |
|---|---|---|
| Berlin | 13 November 2012 | Ernst, Monika |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 12 17 3157

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ANONYMOUS: "Ground-Fault Analysis and Protection in PV Arrays", <br> , <br> 28 July 2011 (2011-07-28), pages 1-4, XP002687005, <br> Retrieved from the Internet: <br> URL:http://ep-us.mersen.com/resources/media/articles/TT-PVPN1-Ground%20Fault%20Analysis.pdf <br> [retrieved on 2012-11-09] <br> * figure 3 * | 1-16 | |
| A | ANONYMOUS: "Guide To Interpreting I-V Curve Measurements of PV Arrays", <br> , <br> 1 March 2011 (2011-03-01), pages 1-23, XP002687006, <br> Retrieved from the Internet: <br> URL:http://resources.solmetric.com/get/Guide%20to%20Interpreting%20I-V%20Curves.pdf <br> [retrieved on 2012-11-09] <br> * the whole document * | 1-16 | |
| A | EISA A A A ET AL: "Accurate one-end fault location for overhead transmission lines in interconnected power systems", INTERNATIONAL JOURNAL OF ELECTRICAL POWER & ENERGY SYSTEMS, JORDAN HILL, OXFORD, GB, vol. 32, no. 5, 1 June 2010 (2010-06-01), pages 383-389, XP026983934, ISSN: 0142-0615 <br> [retrieved on 2010-02-04] <br> * abstract; figures 2,3 * | 1-16 | TECHNICAL FIELDS SEARCHED (IPC) |
| A | US 2009/243623 A1 (JONES CHRISTOPHER G [US]) 1 October 2009 (2009-10-01) <br> * abstract; figures 1,2 * | 1-16 | |

The present search report has been drawn up for all claims

| Place of search | Date of completion of the search | Examiner |
|---|---|---|
| Berlin | 13 November 2012 | Ernst, Monika |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

......................................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 12 17 3157

This annex lists the patent family members relating to the patent documents cited in the above-mentioned European search report.
The members are as contained in the European Patent Office EDP file on
The European Patent Office is in no way liable for these particulars which are merely given for the purpose of information.

13-11-2012

| Patent document cited in search report | | Publication date | Patent family member(s) | | Publication date |
|---|---|---|---|---|---|
| WO 2011048122 | A1 | 28-04-2011 | EP FR US WO | 2491413 A1<br>2951886 A1<br>2012200311 A1<br>2011048122 A1 | 29-08-2012<br>29-04-2011<br>09-08-2012<br>28-04-2011 |
| JP 2012119382 | A | 21-06-2012 | JP WO | 2012119382 A<br>2012073836 A1 | 21-06-2012<br>07-06-2012 |
| KR 20120065830 | A | 21-06-2012 | NONE | | |
| EP 1857825 | A1 | 21-11-2007 | DE EP US | 102006022686 A1<br>1857825 A1<br>2007285102 A1 | 22-11-2007<br>21-11-2007<br>13-12-2007 |
| US 2009243623 | A1 | 01-10-2009 | NONE | | |

EPO FORM P0459

For more details about this annex : see Official Journal of the European Patent Office, No. 12/82